# EUROPEAN PATENT APPLICATION

(11) **EP 4 531 451 A1**
(43) Date of publication of application: **02.04.2025**
(21) Application number: 24203306.6
(22) Date of filing: 27.09.2024
(51) Int. Cl.: H04W 28/02

(54) **METHOD AND APPARATUS FOR DELAY STATUS REPORTING IN WIRELESS NETWORKS**

(30) Priority: 28.09.2023 US 202363586194 P
(71) Applicant: FG Innovation Company Limited, Tuen Mun, New Territories (HK)
(72) Inventor: CHANG, Tzu-Wen, 236 New Taipei City (TW); CHEN, Hung-Chen, 236 New Taipei City (TW)
(74) Representative: Müller Hoffmann & Partner

(57) **Abstract**

A method performed by a UE for Delay Status Reporting (DSR) is provided. The method receives, from a BS, configuration information related to a Logical Channel Group (LCG). The method generates a DSR Medium Access Control (MAC) Control Element (CE) including a first field indicating a buffer size for the LCG and transmits the DSR MAC CE to the BS. The buffer size indicates a total amount of delay-critical data for the LCG. The delay-critical data for the LCG includes a first Packet Data Convergence Protocol (PDCP) Service Data Unit (SDU), for which a first discard timer has a remaining time value less than a time threshold associated with the LCG, and a second PDCP SDU belonging to a Protocol Data Unit (PDU) set that includes at least one PDCP SDU for which a second discard timer has a remaining time value less than the time threshold.

## Description

### FIELD

The present disclosure is related to wireless communication and, more specifically, to a User Equipment (UE), Base Station (BS), and method for Delay Status Reporting (DSR) in the wireless communication networks.

### BACKGROUND

Various efforts have been made to improve different aspects of wireless communication for the cellular wireless communication systems, such as the 5^{th} Generation (5G) New Radio (NR), by improving data rate, latency, reliability, and mobility. The 5G NR system is designed to provide flexibility and configurability to optimize network services and types, accommodating various use cases, such as enhanced Mobile Broadband (eMBB), massive Machine-Type Communication (mMTC), and Ultra-Reliable and Low-Latency Communication (URLLC). As the demand for radio access continues to grow, however, there exists a need for further improvements in the next-generation wireless communication systems, such as improvements in a DSR procedure.

### SUMMARY

The present disclosure is related to a UE, a BS, and a method for DSR in the wireless communication networks.

In a first aspect of the present application, a method performed by a UE for DSR is provided. The method includes receiving, from a BS, configuration information related to a Logical Channel Group (LCG) via Radio Resource Control (RRC) signaling; triggering a DSR procedure; generating a DSR Medium Access Control (MAC) Control Element (CE) including a first field indicating a buffer size for the LCG; and transmitting the DSR MAC CE to the BS. The buffer size indicates a total amount of delay-critical data for the LCG. The delay-critical data for the LCG includes a first Packet Data Convergence Protocol (PDCP) Service Data Unit (SDU) for which a first discard timer has a remaining time value less than a time threshold associated with the LCG; and a second PDCP SDU belonging to a Protocol Data Unit (PDU) set that includes at least one PDCP SDU for which a second discard timer has a remaining time value less than the time threshold.

In some implementations of the first aspect, the method further includes receiving, from the BS, the time threshold associated with the LCG via the RRC signaling.

In some implementations of the first aspect, triggering the DSR procedure includes triggering the DSR procedure upon determining that a remaining time value of a discard timer associated with a PDCP SDU belonging to the LCG has become less than the time threshold and no DSR procedure has been triggered.

In some implementations of the first aspect, the method further includes determining the buffer size for the LCG based on either a first predefined table or a second predefined table.

In some implementations of the first aspect, the first predefined table is for extended Reality (XR) services.

In some implementations of the first aspect, determining the buffer size for the LCG includes determining the buffer size for the LCG based on the first predefined table in response to receiving a table indication from the BS via the RRC signaling; and determining the buffer size for the LCG based on the second predefined table in a case that the table indication is not received from the BS.

In some implementations of the first aspect, the DSR MAC CE further includes a second field indicating a minimum remaining time of the delay-critical data for the LCG.

In some implementations of the first aspect, the method further includes transmitting, to the BS, a Scheduling Request (SR) for requesting uplink resources for the transmission of the DSR MAC CE.

In a second aspect of the present application, a UE for DSR is provided. The UE includes at least one processor and at least one non-transitory computer-readable medium that is coupled to the at least one processor and that stores one or more computer-executable instructions. The computer-executable instructions, when executed by the at least one processor, cause the UE to: receive, from a BS, configuration information related to an LCG via RRC signaling; trigger a DSR procedure; generating a DSR MAC CE including a first field indicating a buffer size for the LCG; and transmit the DSR MAC CE to the BS. The buffer size indicates a total amount of delay-critical data for the LCG. The delay-critical data for the LCG includes a first PDCP SDU for which a first discard timer has a remaining time value less than a time threshold associated with the LCG; and a second PDCP SDU belonging to a PDU set that includes at least one PDCP SDU for which a second discard timer has a remaining time value less than the time threshold.

In a third aspect of the present application, a BS for configuring DSR is provided. The BS includes at least one processor and at least one non-transitory computer-readable medium that is coupled to the at least one processor and that stores one or more computer-executable instructions. The computer-executable instructions, when executed by the at least one processor, cause the BS to: transmit, to a UE, configuration information related to an LCG via RRC signaling; and receive, from the UE, a DSR MAC CE including a first field indicating a buffer size for the LCG. The buffer size indicates a total amount of delay-critical data for the LCG. The delay-critical data for the LCG includes a first PDCP SDU for which a first discard timer has a remaining time value less than a time threshold associated with the LCG; and a second PDCP SDU belonging to a PDU set that includes at least one PDCP SDU for which a second discard timer has a remaining time value less than the time threshold.

### BRIEF DESCRIPTION OF THE DRAWINGS

Aspects of the present disclosure are best understood from the following detailed disclosure when read with the accompanying drawings. Various features are not drawn to scale. Dimensions of various features may be arbitrarily increased or reduced for clarity of discussion.
FIG. 1 is a timing diagram illustrating a PDU set based discard operation, according to an example implementation of the present disclosure.
FIG. 2 is a timing diagram illustrating different DSR operations, according to an example implementation of the present disclosure.
FIG. 3 is a timing diagram illustrating a discard timer initialization, according to an example implementation of the present disclosure.
FIG. 4 is a flowchart illustrating a method/process performed by a UE for DSR, according to an example implementation of the present disclosure.
FIG. 5 is a flowchart illustrating a method/process performed by a BS for configuring DSR, according to an example implementation of the present disclosure.
FIG. 6 is a block diagram illustrating a node for wireless communication, according to an example implementation of the present disclosure.

### DETAILED DESCRIPTION

Some of the abbreviations used in the present disclosure include:

| Abbreviation | Full name |
|---|---|
| 3GPP | 3^{rd} Generation Partnership Project |
| 5G | 5^{th} Generation |
| ACK | Acknowledgment |
| AR | Augmented Reality |
| BS | Base Station |
| BSR | Buffer Status Report |
| BWP | Bandwidth Part |
| C-RNTI | Cell RNTI |
| CA | Carrier Aggregation |
| CBRA | Contention Based Random Access |
| CC | Component Carrier |
| CFRA | Contention Free Random Access |
| CG | Configured Grant |
| CHO | Conditional Handover |
| CP | Cyclic Prefix |
| CRC | Cyclic Redundancy Check |
| CS-RNTI | Configured Scheduling RNTI |
| CSI | Channel State Information |
| CSI-RS | Channel State Information Reference Signal |
| DC | Dual Connectivity |
| DCI | Downlink Control Information |
| DL | Downlink |
| DM-RS | Demodulation Reference Signal |
| DSR | Delay Status Reporting |
| DRB | Data Radio Bearer |
| DRX | Discontinuous Reception |
| DTX | Discontinuous Transmission |
| E-UTRA | Evolved Universal Terrestrial Radio Access |
| eLCID | Extended Logical Channel ID |
| FDD | Frequency Division Duplex |
| FR | Frequency Range |
| GPRS | General Packet Radio Service |
| GTP-U | GPRS Tunnelling Protocol for User Plane |
| HARQ | Hybrid Automatic Repeat Request |
| HARQ-ACK | HARQ Acknowledgement |
| HO | Handover |
| ID | Identifier |
| IE | Information Element |
| L1/L2/L3 | Layer 1/Layer 2/Layer 3 |
| LCG | Logical Channel Group |
| LCID | Logical Channel ID |
| LCP | Logical Channel Prioritization |
| LTE | Long Term Evolution |
| MAC | Medium Access Control |
| MAC CE | MAC Control Element |
| MCG | Master Cell Group |
| MCS | Modulation and Coding Scheme |
| MN | Master Node |
| NAS | Non Access Stratum |
| NES | Network Energy Saving |
| NG-RAN | Next Generation RAN |
| NR | New Radio |
| NUL | Normal Uplink |
| NW | Network |
| NZP | Non-Zero Power |
| OFDM | Orthogonal Frequency Division Multiplexing |
| PCell | Primary Cell |
| PCI | Physical Cell Identifier |
| PDB | Packet Delay Budget |
| PDCCH | Physical Downlink Control Channel |
| PDCP | Packet Data Convergence Protocol |
| PDSCH | Physical Downlink Shared Channel |
| PDU | Protocol Data Unit |
| PER | Packet Error Rate |
| PHY | Physical (layer) |
| PRACH | Physical Random Access Channel |
| PSCell | Primary SCG Cell |
| PSDB | PDU Set Delay Budget |
| PSER | PDU Set Error Rate |
| PSI | PDU Set Importance |
| PSIHI | PDU Set Integrated Handling Information |
| PUCCH | Physical Uplink Control Channel |
| PUSCH | Physical Uplink Shared Channel |
| QCL | Quasi Co-Location |
| QoS | Quality of Service |
| RA | Random Access |
| RACH | Random Access Channel |
| RAN | Radio Access Network |
| RAR | Random Access Response |
| Rel | Release |
| RF | Radio Frequency |
| RLC | Radio Link Control |
| RLF | Radio Link Failure |
| RNTI | Radio Network Temporary Identifier |
| RRC | Radio Resource Control |
| RS | Reference Signal |
| RSRP | Reference Signal Received Power |
| Rx | Reception |
| SCell | Secondary Cell |
| SCG | Secondary Cell Group |
| SCS | SubCarrier Spacing |
| SDM | Spatial Division Multiplexing |
| SDU | Service Data Unit |
| SFN | System Frame Number |
| SI | System Information |
| SIB | System Information Block |
| SL | Sidelink |
| SMF | Session Management Function |
| SN | Secondary Node |
| SpCell | Special Cell |
| SPS | Semi-Persistent Scheduling |
| SR | Scheduling Request |
| SRS | Sounding Reference Signal |
| SSB | Synchronization Signal Block |
| SUL | Supplementary Uplink |
| TA | Timing Advance |
| TAG | Timing Advance Group |
| TB | Transport Block |
| TCI | Transmission Configuration Indicator |
| TDD | Time Division Duplex |
| TRP | Transmission Reception Point |
| TR | Technical Report |
| TS | Technical Specification |
| Tx | Transmission |
| UE | User Equipment |
| UL | Uplink |
| UL-SCH | Uplink Shared Channel |
| UPF | User Plane Function |
| URLLC | Ultra-Reliable and Low-Latency Communication |
| V2X | Vehicle to Everything |
| XR | extended Reality |

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

Unless noted otherwise, like or corresponding elements among the drawings may be indicated by like or corresponding reference numerals. Moreover, the drawings and illustrations in the present disclosure are generally not to scale and are not intended to correspond to actual relative dimensions.

For the purposes of consistency and ease of understanding, like features may be identified (although, in some examples, not illustrated) by the same numerals in the drawings. However, the features in different implementations may be different in other respects and may not be narrowly confined to what is illustrated in the drawings.

References to "one implementation," "an implementation," "example implementation," "various implementations," "some implementations," "implementations of the present application," etc., may indicate that the implementation(s) of the present application so described may include a particular feature, structure, or characteristic, but not every possible implementation of the present application necessarily includes the particular feature, structure, or characteristic. Further, repeated use of the phrase "In some implementations," or "in an example implementation," "an implementation," do not necessarily refer to the same implementation, although they may. Moreover, any use of phrases like "implementations" in connection with "the present application" are never meant to characterize that all implementations of the present application must include the particular feature, structure, or characteristic, and should instead be understood to mean "at least some implementations of the present application" includes the stated particular feature, structure, or characteristic. The term "coupled" is defined as connected, whether directly or indirectly through intervening components, and is not necessarily limited to physical connections. The term "comprising," when utilized, means "including, but not necessarily limited to"; it specifically indicates openended inclusion or membership in the so-described combination, group, series, and the equivalent.

The expression "at least one of A, B and C" or "at least one of the following: A, B and C" means "only A, or only B, or only C, or any combination of A, B and C." The terms "system" and "network" may be used interchangeably. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

For the purposes of explanation and non-limitation, specific details, such as functional entities, techniques, protocols, and standards, are set forth for providing an understanding of the disclosed technology. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software, or a combination of software and hardware. Disclosed functions may correspond to modules which may be software, hardware, firmware, or any combination thereof.

A software implementation may include computer executable instructions stored on a computer-readable medium, such as memory or other type of storage devices. One or more microprocessors or general-purpose computers with communication processing capability may be programmed with corresponding executable instructions and perform the disclosed network function(s) or algorithm(s).

The microprocessors or general-purpose computers may include Application-Specific Integrated Circuits (ASICs), programmable logic arrays, and/or one or more Digital Signal Processor (DSPs). Although some of the disclosed implementations are oriented to software installed and executing on computer hardware, alternative implementations implemented as firmware, as hardware, or as a combination of hardware and software are well within the scope of the present disclosure. The computer-readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication network architecture such as a Long-Term Evolution (LTE) system, an LTE-Advanced (LTE-A) system, an LTE-Advanced Pro system, or a 5G NR Radio Access Network (RAN) typically includes at least one base station (BS), at least one UE, and one or more optional network elements that provide connection within a network. The UE communicates with the network such as a Core Network (CN), an Evolved Packet Core (EPC) network, an Evolved Universal Terrestrial RAN (E-UTRAN), a 5G Core (5GC), or an internet via a RAN established by one or more BSs.

A UE may include, but is not limited to, a mobile station, a mobile terminal or device, or a user communication radio terminal. The UE may be a portable radio equipment that includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a RAN.

The BS may be configured to provide communication services according to at least a Radio Access Technology (RAT) such as Worldwide Interoperability for Microwave Access (WiMAX), Global System for Mobile communications (GSM) that is often referred to as 2G, GSM Enhanced Data rates for GSM Evolution (EDGE) RAN (GERAN), General Packet Radio Service (GPRS), Universal Mobile Telecommunication System (UMTS) that is often referred to as 3G based on basic wideband-code division multiple access (W-CDMA), high-speed packet access (HSPA), LTE, LTE-A, evolved LTE (eLTE) that is LTE connected to 5GC, NR (often referred to as 5G), and/or LTE-APro. However, the scope of the present disclosure is not limited to these protocols.

The BS may include, but is not limited to, a node B (NB) in the UMTS, an evolved node B (eNB) in LTE or LTE-A, a radio network controller (RNC) in UMTS, a BS controller (BSC) in the GSM/GERAN, an ng-eNB in an Evolved Universal Terrestrial Radio Access (E-UTRA) BS in connection with 5GC, a next generation Node B (gNB) in the 5G-RAN, or any other apparatus capable of controlling radio communication and managing radio resources within a cell. The BS may serve one or more UEs via a radio interface. Although the gNB is used as an example in some implementations within the present disclosure, it should be noted that the disclosed implementations may also be applied to other types of base stations.

The BS may be operable to provide radio coverage to a specific geographical area using multiple cells forming the RAN. The BS may support the operations of the cells. Each cell may be operable to provide services to at least one UE within its radio coverage.

Each cell (may often referred to as a serving cell) may provide services to one or more UEs within the cell's radio coverage, such that each cell schedules the DL (and optionally UL resources) to at least one UE within its radio coverage for DL (and optionally UL packet transmissions from the UE). The BS may communicate with one or more UEs in the radio communication system via the cells.

A cell may allocate sidelink (SL) resources for supporting the Proximity Services (ProSe) or Vehicle to Everything (V2X) services. Each cell may have overlapped coverage areas with other cells.

In Multi-RAT Dual Connectivity (MR-DC) cases, the primary cell of a Master Cell Group (MCG) or a Secondary Cell Group (SCG) may be referred to as a Special Cell (SpCell). A Primary Cell (PCell) may include the SpCell of an MCG. A Primary SCG Cell (PSCell) may include the SpCell of an SCG. MCG may include a group of serving cells associated with the Master Node (MN), including the SpCell and optionally one or more Secondary Cells (SCells). An SCG may include a group of serving cells associated with the Secondary Node (SN), including the SpCell and optionally one or more SCells.

As discussed above, the frame structure for NR may support flexible configurations for accommodating various next generation (e.g., 5G) communication requirements, such as Enhanced Mobile Broadband (eMBB), Massive Machine Type Communication (mMTC), and Ultra-Reliable and Low-Latency Communication (URLLC), while fulfilling high reliability, high data rate, and low latency requirements. The Orthogonal Frequency-Division Multiplexing (OFDM) technology in the 3GPP may serve as a baseline for an NR waveform. The scalable OFDM numerology, such as adaptive sub-carrier spacing, channel bandwidth, and Cyclic Prefix (CP), may also be used.

Two coding schemes may be considered for NR, specifically, Low-Density Parity-Check (LDPC) code and Polar Code. The coding scheme adaption may be configured based on channel conditions and/or service applications.

At least the DL transmission data, a guard period, and UL transmission data should be included in a transmission time interval (TTI) of a single NR frame. The respective portions of the DL transmission data, the guard period, and the UL transmission data should also be configurable based on, for example, the network dynamics of NR. SL resources may also be provided in an NR frame to support ProSe services or V2X services.

Any two or more than two of the following paragraphs, (sub)-bullets, points, actions, behaviors, terms, or claims described in the present disclosure may be combined logically, reasonably, and properly to form a specific method.

Any sentence, paragraph, (sub)-bullet, point, action, behaviors, terms, or claims described in the present disclosure may be implemented independently and separately to form a specific method.

Dependency, e.g., "based on", "more specifically", "preferably", "in one embodiment", "in some implementations", etc., in the present disclosure is just one possible example which would not restrict the specific method.

In some implementations, all the designs/embodiment/implementations introduced within this disclosure are not limited to be applied for dealing with the problems discussed within this disclosure. For example, the described embodiments may be applied to solve other problems that exist in the RAN of wireless communication systems. In some implementations, all of the numbers listed within the designs/embodiment/implementations introduced within this disclosure are just examples and for illustration, for example, of how the described methods are executed.

A DL RRC message in the present disclosure may include, but is not limited to, an RRC reconfiguration message (*RRCReconfiguration*), an RRC resume message (*RRCResume*), an RRC reestablishment message (*RRCReestablishment*), an RRC setup message (*RRCSetup*) or any other DL unicast RRC message.

In some implementations, "a specific configuration is per UE configured" or "a specific configuration is configured for a UE" described in the present disclosure may represent the specific configuration that is, but is not limited to be, configured within a DL RRC message.

In some implementations, "a specific configuration is per cell group configured" or "a specific configuration is configured for a cell group" described in the present disclosure may represent the specific configuration that is, but is not limited to be, configured within a cell group configuration (e.g., the *CellGroupConfig, MAC-CellGroupConfig,* or *PhysicalCellGroupConfig* IE).

In some implementations, "a specific configuration is per serving cell configured" or "a specific configuration is configured for a serving cell" described in the present disclosure may represent the specific configuration that is, but is not limited to be, configured within a serving cell configuration (e.g., the *ServingCellConfigCommon, ServingCellConfig, PUSCH-ServingCellConfig,* or *PDSCH-ServingCellConfig* IE).

In some implementations, "a specific configuration is per UL BWP or per BWP configured" or "a specific configuration is configured for a UL BWP or for a BWP" described in the present disclosure may represent the specific configuration that is, but is not limited to be, configured within one of the followings IEs: the *BWP-Uplink, BWP-UplinkDedicated, BWP-UplinkCommon, PUSCH-ConfigCommon,* and *PUSCH-Config.*

In some implementations, "a specific configuration is per DL BWP or per BWP configured" or "a specific configuration is configured for a DL BWP or for a BWP" described in the present disclosure may represent the specific configuration that is, but is not limited to be, configured within one of the followings IEs: the *BWP-Downlink, BWP-DownlinkDedicated, BWP-DownlinkCommon, PDSCH-ConfigCommon, and PDSCH Config IE.*

In some implementations, A PDSCH/PDSCH/PUSCH transmission may span multiple symbols in the time domain. A time duration of a PDSCH/PDSCH/PUSCH (transmission) may imply a time interval that starts from the beginning of the first symbol of the PDSCH/PDSCH/PUSCH (transmission) and ends at the end of the last symbol of the PDSCH/PDSCH/PUSCH (transmission).

The term "A and/or B" within the present disclosure means "A", "B", or "A and B". The term "A and/or B and/or C" within the present disclosure means "A", "B", "C", "A and B", "A and C", "B and C", or "A and B and C". The term "A/B" within the present disclosure means "A" or "B".

The term "(specific) PHY layer signaling" may refer to a specific format of the DCI, a specific field of the DCI, a specific field of the DCI with the field being set to a specific value, and/or the DCI with CRC bits scrambled with a specific RNTI.

In the present disclosure, "a MAC timer" may include, but is not limited to, a timer configured by a base station via RRC signaling. The UE may be configured with an initial value of the timer and the unit of the value may include, but is not limited to, frame/sub-frame/milli second/sub-milli second/slot/symbol. The timer may be started and/or restarted by the UE (e.g., by the MAC entity of the UE). The timer may be started and/or restarted by the UE (e.g., by the MAC entity of the UE) when a specific condition is satisfied.

Examples of some selected terms in the present disclosure are provided as follows.

**BWP:** A subset of the total cell bandwidth of a cell is referred to as a Bandwidth Part (BWP) and a Bandwidth Adaptation (BA) may be achieved by configuring the UE with BWP(s) and instructing the UE which of the configured BWPs is currently the active one. To enable a BA on the PCell, the BS (e.g., a gNB) configures the UE with UL and DL BWP(s). To enable the BA on SCells, when CA is deployed, the BS configures the UE with one or more DL BWPs. It should be noted that there may be no BWP in the UL. For the PCell, the initial BWP is the BWP used for an initial access. For the SCell(s), the initial BWP is the BWP configured for the UE to operate after an SCell activation. The UE may be configured with a first active uplink BWP by a *firstActiveUplinkBWP* IE. If the first active uplink BWP is configured for an SpCell, the *firstActiveUplinkBWP* IE field may contain the ID of the UL BWP to be activated upon performing the RRC (re-)configuration. If such a field is absent, the RRC (re-)configuration may not impose a BWP switching. If the first active uplink BWP is configured for an SCell, the *firstActiveUplinkBWP* IE field may contain the ID of the uplink bandwidth part to be used upon the MAC-activation of an SCell.

**Cell:** A radio network object that may be uniquely identified by a User Equipment from a (cell) identification that is broadcast over a geographical area from, for example, a UTRAN Access Point. A Cell is either in an FDD mode or a TDD mode.

**Data Burst:** A set of multiple PDUs generated and sent by the application in a short period of time, as defined in the 3GPP TS 23.501.

**Field:** The contents of an information element may be referred to as fields.

**Information element:** A structural element containing single or multiple fields may be referred to as an information element.

**PDCCH:** In the downlink, a base station (e.g., a gNB) may dynamically allocate resources to the UEs at least via the C-RNTI/MCS-C-RNTI/CS-RNTI on PDCCH(s). A UE always monitors the PDCCH(s) in order to find possible assignments when its downlink reception is enabled (e.g., activities governed by the DRX when configured). When CA is configured, the same C-RNTI may be applied to all serving cells.

**PDCP data volume:** The amount of data available for transmission in a PDCP entity.

**PDSCH/PUSCH:** The PDCCH may be used to schedule the DL transmissions on a PDSCH, and UL transmissions on a PUSCH.

**PDU Set:** A set including one or more PDUs carrying the payload of one unit of information generated at the application level (e.g., frame(s) or video slice(s) for XR services), as defined in the 3GPP TS 23.501.

**Primary Cell:** The MCG cell, operating on the primary frequency, in which the UE either performs the initial connection establishment procedure or initiates the connection reestablishment procedure may be referred to as a primary cell.

**RLC data volume:** The amount of data available for transmission in an RLC entity.

**Secondary Cell:** For a UE configured with CA, a cell that provides additional radio resources on top of the special cell may be referred to as a secondary cell.

**Serving Cell:** For a UE in the RRC_CONNECTED state, that is not configured with CA/DC, there is only one serving cell which is a primary cell. For a UE in the RRC_CONNECTED state, that is configured with CA/ DC, the term 'serving cells' is used to denote a set of cells including the Special Cell(s) and all secondary cells.

**Special Cell (SpCell):** For a Dual Connectivity operation, the term Special Cell may include the PCell of the MCG or the PSCell of the SCG. Otherwise, the term Special Cell may include the PCell.

**Timing Advance Group:** A group of serving cells that is configured by RRC signaling and that, for the cells with a UL configured, use the same timing reference cell, and the same Timing Advance value may be referred to as a timing advance group. A Timing Advance Group including the SpCell of a MAC entity may be referred to as a Primary Timing Advance Group (PTAG), whereas the term Secondary Timing Advance Group (STAG) may refer to other TAGs.

**Timer:** A PDCP/MAC entity may set up one or more timers for different purposes, for example, triggering one or more uplink signaling retransmissions or limiting one or more uplink signaling retransmission periods. A timer is running once it is started, until it is stopped, or until it expires, otherwise, it is not running. A timer may be started if it is not running, or restarted if it is running. A timer is always started or restarted from its initial value. The initial value may be, but is not limited to be, configured by the gNB via downlink RRC signaling or be a pre-defined/pre-determined value addressed in some specifications.

In the NR, uplink BSRs are introduced to provide support for QoS-aware packet scheduling. Specifically, uplink BSRs may correspond to data that is buffered for a group of logical channels (e.g., an LCG) in the UE. In addition, uplink BSRs may be transmitted via MAC signaling (e.g., via BSR MAC CEs). When a BSR is triggered (e.g., when new UL data arrives in the transmission buffers of the UE), a Scheduling Request (SR) may be transmitted by the UE (e.g., when no UL resources are available to transmit the BSR).

When UL resources are available for a new transmission, a Multiplexing and Assembly procedure may be used to multiplex the MAC SDUs belonging to one or more logical channels into transport blocks (TBs) delivered to the physical layer on the transport channels. More specifically, a Logical Channel Prioritization (LCP) procedure may be applied whenever a new transmission is performed. The UE may allocate the UL resources to the logical channels, according to the result of the LCP procedure.

Moreover, in order to meet the QoS requirements associated with a service, the UE may discard the PDCP SDUs that violate the QoS requirement. The base station (e.g., gNB) may configure the UE, for example, via RRC signaling, with a discard timer for each PDCP entity, which may be associated with a radio bearer. This discard timer may be set in units of milliseconds (ms). The discard timer may be configured only for Data Radio Bearers (DRBs). When the discard timer is configured for a (transmitting) PDCP entity, upon reception of an SDU from the upper layer, the PDCP entity may start a new timer for the corresponding PDCP SDU. When the discard timer for a PDCP SDU expires, or the successful delivery of a PDCP SDU is confirmed, for example, by a PDCP status report, the (transmitting) PDCP entity may discard the PDCP SDU along with the corresponding PDCP data PDU. If the corresponding PDCP data PDU has already been submitted to the lower layers, the discard may be indicated to the lower layers as well.

In the XR services, the traffic may be modelled as a sequence of video frames arriving at the BS/UE according to the considered video frame rates and random jitter. More specifically, an XR application may produce/send multiple PDUs (e.g., several video frames or video slices). A set of multiple PDUs may be further grouped into a PDU set, indicating a dependency between the PDUs of the PDU set. To efficiently schedule radio resources for the XR traffic, the BS/UE may need to be aware of the XR traffic (e.g., the XR-Awareness), which may be realized by enabling the PDU set QoS flow handling. Due to the delay-sensitive nature of the XR traffic, UL Delay Status Reporting (DSR) may be introduced to inform the BS of the delay status of buffered data, facilitating an improved uplink resource scheduling.

### PDU Set QoS Flow Handling

XR-Awareness relies on the QoS flows, PDU sets, data bursts, and traffic assistance information (e.g., as described in the 3GPP TS 23.501). The following PDU set QoS parameters may be provided by the SMF to the BS, as part of the QoS profile of the QoS flow. To enable the PDU set based QoS handling, at least one of the following PDU set QoS parameters may be provided:
- PDU Set Delay Budget (PSDB): as defined in the 3GPP TS 23.501, a PSDB may include the upper bound for the duration between the reception time of the first PDU (at the UPF for the DL, or at the UE for the UL) and the time when all the PDUs of a PDU set have been successfully received (at the UE for the DL, or at the UPF for the UL). A QoS flow may be associated with only one PSDB. The PSDB may apply to both DL and UL and may supersede the PDB of the QoS flow.
- PDU Set Error Rate (PSER): as defined in the 3GPP TS 23.501, a PSER may include the upper bound for a rate of non-congestion related PDU set losses between the RAN and the UE. A QoS flow may be associated with only one PSER. The PSER may apply to both DL and UL and supersede the PER of the QoS flow.
- PDU Set Integrated Handling Information (PSIHI): The PSIHI may indicate whether all the PDUs of the PDU set are needed for the usage of PDU set by the application layer, as defined in the 3GPP TS 23.501.

A PDU set may be considered as successfully delivered only when all the PDUs of the PDU set are delivered successfully. The PDU set QoS parameters may be common for all the PDU sets within a QoS flow.

The UPF may identify the PDUs that belong to the PDU sets and may indicate to the BS the following PDU set information in the GTP-U header:
- PDU Set Sequence Number;
- Indication of End PDU of the PDU Set;
- PDU Sequence Number within a PDU Set;
- PDU Set Size in bytes;
- PDU Set Importance (PSI). The PSI may identify the relative importance of a PDU Set compared to other PDU Sets within the same QoS Flow.

In the uplink, the UE may identify the PDU sets, including the PDU set information, and data bursts dynamically, as described above. How this is done may depend on the UE's implementation.

### PDCP PDU Set Discard Operation

When the UE/BS identifies that all the PDUs of the PDU set are needed for employing the PDU set, for example, by the application layer (e.g., the PSIHI is set for a QoS flow), as soon as one PDU of the PDU set is known to be lost, the remaining PDUs of the PDU set may be considered as no longer needed by the application, and may be subject to a discard operation, for example, at the transmitter, to free up radio resources.

In uplink, the UE may be configured with a PDU set based discard operation for a specific DRB. When the PDU set based discard operation is configured, the UE may discard all the packets in a PDU set when one PDU belonging to the PDU set is discarded due to expiration of a discard timer (e.g., the *discardTimer*). In the uplink, the UE may need to identify the PDU sets, including the PSI, and data bursts dynamically. How this is done may depend on the UE's implementation. The UE may be configured with an indicator (e.g., the *pdu-SetDiscard*) per PDCP entity. If the indicator is set to true for a PDCP entity, the UE may perform the PDU set based discard operation for that PDCP entity. For example, when the *discardTimer* expires for a PDCP SDU, if the *pdu-SetDiscard* is configured, the transmitting PDCP may discard all the PDCP SDUs belonging to the PDU set to which the PDCP SDU belongs along with the corresponding PDCP data PDUs, otherwise, the transmitting PDCP entity may discard the PDCP SDU along with the corresponding PDCP data PDU.

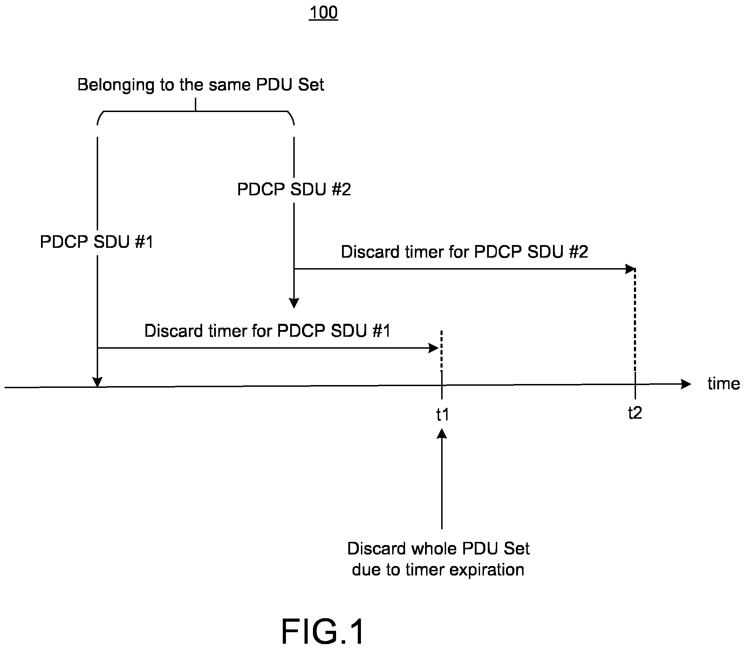

FIG. 1 is a timing diagram 100 illustrating a PDU set based discard operation, according to an example implementation of the present disclosure. As shown in FIG. 1, PDCP SDU #1 and PDCP SDU #2 belong to the same PDU set. The discard timer for PDCP SDU #1 expires at t1, and the discard timer for PDCP SDU #2 expires at t2. When the discard timer for PDCP SDU #1 expires at t1, the UE may discard the whole PDU set, including PDCP SDU #1 and PDCP SDU #2.

In case of congestion, the PSI may be used for the PDU set discarding. For uplink, dedicated downlink signaling may be used to trigger a discard mechanism based on the PSI. More specifically, the UE may be configured with an indicator (e.g., the *psi-BasedDiscard*) per PDCP entity. If the indicator is configured, the UE may perform the PSI based discard operation for the corresponding PDCP entity. For example, when the congestion occurs and/or is indicated, if the *psi-BasedDiscard* is configured, the transmitting PDCP entity may discard all the PDCP SDUs belonging to the PDU set, the PSI of which is less than a threshold, along with the corresponding PDCP data PDUs. The threshold may be configured by the BS, for example, via RRC signaling.

Some implementations of the present disclosure may employ a delay status reporting of the buffered data via a dedicated MAC CE (e.g., the DSR MAC CE). In general, a DSR may be triggered based on one or more remaining time threshold(s) configured by the network. The content of the DSR may include the data volume that is buffered per LCG (or the volume of urgent data determined based on the time threshold(s) that is buffered in the associated logical channel(s)) and the delay information (e.g., the remaining time) associated with the buffered data. Thus, the DSR procedure may be used to provide the serving BS with the delay status of the UL data. Regarding the DSR procedure, the following issues will be addressed in the present disclosure: conditions for DSR triggering and cancelling, enhancements of PDCP/RLC data volume calculation for the DSR, and details on the DSR MAC CE.

### DSR Configurations

To enable the DSR operations (e.g., transmitting the DSR to a serving BS), a UE may be configured, e.g., by the BS via RRC signaling, with a DSR configuration (e.g., the *LCG-DSR-Config)* per LCG. One or more Logical channels that belong to an LCG may be configured by the gNB, e.g., via RRC signaling. Moreover, the gNB may control the DSR operations by configuring a time threshold (e.g., the *remainingTimeThreshold*) on the remaining time of the UL data for triggering the DSRs for the LCG, where the time threshold may be included in the DSR configuration. Table 1 below illustrates an example DSR configuration, according to an example implementation of the present disclosure.

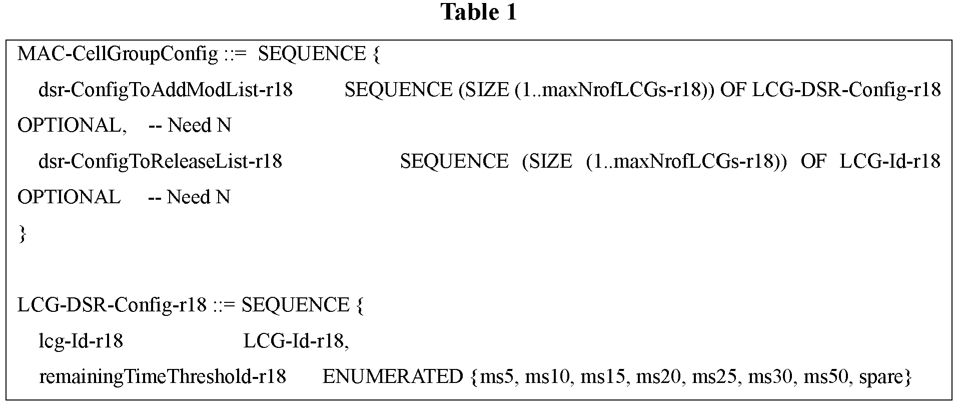

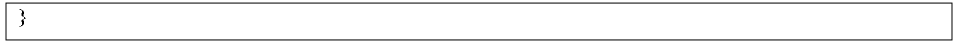

In some implementations, if the UE is configured with the DSR configuration for an LCG, the UE may be allowed to trigger/transmit the DSRs for the LCG, otherwise, the UE may not be allowed to trigger/transmit any DSR for the LCG. As an example, there may be an indication in the DSR configuration to enable or disable the DSR operations for the associated LCG. As another example, there may be an indication in the DSR configuration to enable (or setup) the DSR operations for the associated LCG. If the indication in the DSR configuration is not present, the DSR operations of the associated LCG may be disabled. In some implementations, the UE may be configured with the DSR configuration for an LCG to perform an associated DSR operation with an initial state (e.g., enable or disable) or a default/specified state (e.g., enable or disable). Afterwards, the BS may enable/disable the DSR operation of the associated LCG, e.g., via RRC signaling, a MAC CE, or DCI.

In some implementations, a single time threshold may be configured for an LCG. In other words, an LCG may not be associated with more than one time threshold. As an example, the UE may be configured with two LCGs, including LCG #1 and LCG #2, and the UE may be further configured with a first time threshold T1 for LCG #1 and a second time threshold T2 for LCG #2. As another example, the UE may be configured with two LCGs, including LCG #1 and LCG #2, and the UE may be further configured with a first time threshold T1 for LCG #1 only. In this example, the UE may only perform the DSR operation associated with LCG #1 and may not perform the DSR operation associated with LCG #2.

In some implementations, multiple time thresholds may be configured per LCG. In other words, an LCG may be associated with more than one time threshold. For example, the UE may be configured with a first time threshold T1 and a second time threshold T2 for LCG #1.

In some implementations, when multiple time thresholds are configured for an LCG, the UE may determine which time threshold is used for triggering the DSR for the LCG.

In some implementations, when multiple time thresholds are configured for an LCG, the UE may be indicated, by the BS, via RRC/MAC/PHY signaling, which time threshold is used for triggering the DSR for the LCG.

In some implementations, two time thresholds for the same LCG may be configured and one of the two time thresholds may be used for the congestion condition. For example, for LCG #1, the UE may be configured with a first time threshold T1 and a second time threshold T2 that is for the congestion condition. In case that the UE does not receive a congestion indication (or the UE receives a congestion alleviation indication) from the serving BS, the UE may apply T1 to perform the DSR operation for LCG #1. In case that the UE receives a congestion indication from the serving BS, the UE may apply T2 to perform the DSR operation for LCG #1.

### DSR Operations

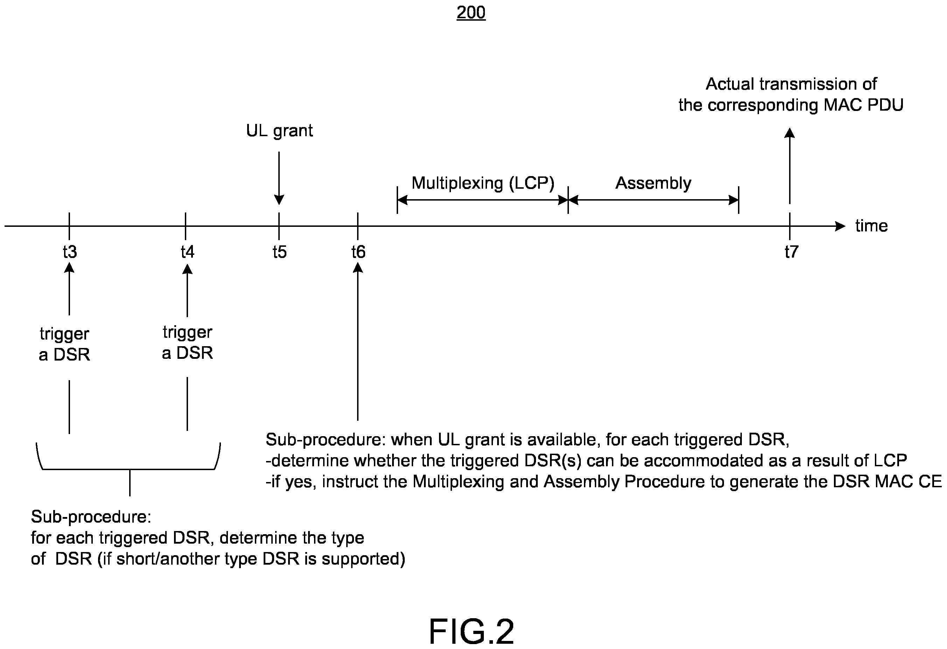

FIG. 2 is a timing diagram 200 illustrating different DSR operations, according to an example implementation of the present disclosure. The DSR operations may include one or more of the following sub-procedures:
- The UE may be configured with a time threshold for an LCG. The UE may trigger one or more than one DSR based on the time threshold (e.g., at t3 and t4).
- For a triggered DSR, the UE may determine which type (e.g., short/long/another type) of DSR is to be reported, and may further determine the format and size of the DSR MAC CE that is to be transmitted.
- For a triggered DSR that is not canceled, when UL-SCH resources are available for a new transmission (e.g., when receiving a UL grant at t5), the UE may determine whether the UL-SCH resources can accommodate the DSR MAC CE and its subheader, as a result of LCP. If the determination is positive (e.g., the UL-SCH resources can accommodate the DSR MAC CE and its subheader), the UE may instruct the Multiplexing and Assembly procedure to generate the corresponding DSR MAC CE (e.g., at t6).
- After the LCP procedure, the fields in the generated DSR MAC CE (e.g., the buffer size field(s) and the remaining time field(s)) may be determined according to a PDCP/RLC delay-critical data volume calculation procedure, where the delay-critical data may represent the data, the delay budget (e.g., the remaining value of a discard timer) of which is less than the time threshold. In some implementations, both logical channel #1 and logical channel #2 may belong to LCG #1 based on the configuration, and LCG #1 may be configured to perform a DSR procedure (or a DSR operation). In case that there is one SDU of logical channel #1 or logical channel #2 with the remaining time less than (or equal to) the time threshold configured for LCG #1, the buffer size reported in the DSR MAC CE may include the total data volume of PDCP/RLC delay-critical data volume of logical channel #1 and PDCP/RLC delay-critical data volume of logical channel #2.

In some implementations, both logical channel #1 and logical channel #2 may belong to LCG #1 based on the configuration, and LCG #1 may be configured to perform a DSR procedure (or a DSR operation). In case that there is one SDU of logical channel #1 with the remaining time less than (or equal to) the time threshold configured for LCG #1 but no SDU of logical channel #2 with the remaining time less than (or equal to) the time threshold configured for LCG #1, the buffer size reported in the DSR MAC CE may include the PDCP/RLC delay-critical data volume of logical channel #1. That is, the PDCP/RLC delay-critical data volume of logical channel #2 may not considered to be reported in the DSR MAC CE. The UE may transmit a corresponding MAC PDU including the DSR MAC CE at t7.

### DSR Triggering

In some implementations, the UE may be configured with a discard timer for a (transmitting) PDCP entity, and the PDCP entity may start a new discard timer upon reception of a (PDCP) SDU from the upper layer.

In some implementations, the value of the new discard timer of a PDCP SDU may be set to the value of the configured discard timer.

In some implementations, the remaining time of a PDU set may be defined as the remaining value of the discard timer of the PDCP SDU corresponding to the PDU with the smallest sequence number within the PDU set.

In some implementations, the remaining time of a PDU set may be defined as the remaining value of the discard timer of the PDU with the smallest remaining value of the discard timer within the PDU set.

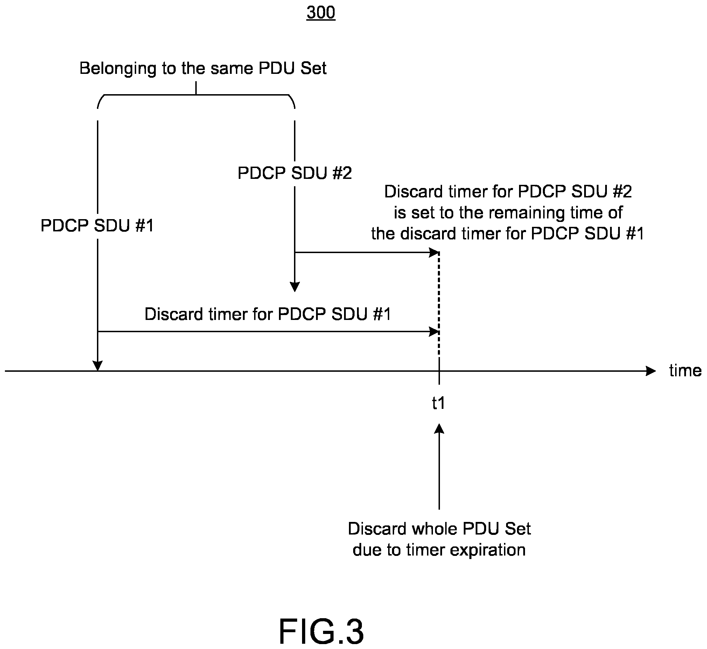

FIG. 3 is a timing diagram 300 illustrating a discard timer initialization, according to an example implementation of the present disclosure. In some implementations, the value of a new discard timer for a PDCP SDU corresponding to a PDU within a PDU set may be set to the remaining value of the discard timer for a PDCU SDU corresponding to a PDU with the smallest sequence number within the PDU set. As shown in FIG. 3, PDCP SDU #1 and PDCP SDU #2 correspond to the PDUs within the same PDU set. PDCP SDU #1 corresponds to the PDU with the smallest sequence number within the PDU set. When the PDCP entity receives PDCP SDU #1, the PDCP entity may start a new discard timer for PDCP SDU #1. Afterward, when the PDCP entity receives PDCP SDU #2, the value of the new discard timer for PDCP SDU #2 may be set to the remaining value of the discard timer for PDCP SDU #1. As such, both the discard timer for PDCP SDU #1 and the discard timer for PDSCP SDU #2 expire at t1, and the UE may discard the whole PDU set at t1.

In some implementations, the UE may be configured with a discard timer for a (transmitting) PDCP entity. Upon reception of a PDCP SDU from the upper layer, the PDCP entity may start a new discard timer for the PDCP SDU if the PDCP SDU corresponds to the PDU with the smallest sequence number within a PDU set. Otherwise, the PDCP entity may not start a new discard timer for the PDCP entity, and the discard timer of the PDCP entity may correspond to the discard timer for the PDCP SDU corresponding to the PDU with the smallest sequence number within the PDU set.

To determine whether a DSR for an LCG is needed/triggered, the UE may be configured by the BS (e.g., via RRC signaling) with a time threshold associated with the LCG. When the UE is configured by the BS with the time threshold associated with the LCG, the UE may perform a DSR triggering operation that triggers a DSR for the LCG when the remaining time of a (PDCP/RLC) SDU belonging to the LCG becomes shorter than (or equal to) the time threshold.

In some implementations, the DSR triggering operation may be performed by a (transmitting) PDCP entity. When the UE is configured (e.g., via RRC signaling) with a time threshold associated with an LCG, the PDCP entity associated with an LCH of the LCG may determine whether a DSR is triggered for this LCG based on the time threshold. More specifically, when the remaining value of the (running) discard timer associated with a PDCP SDU becomes less than (or equal to) the time threshold, the PDCP entity may trigger a DSR, and the triggered DSR with the remaining value may be indicated to the lower layers (e.g., the MAC layer). In some implementations, the PDCP entity triggering a DSR may mean that the PDCP entity indicates to the lower layers (e.g., the MAC layer) to trigger a DSR.

In some implementations, the PDCP entity may trigger a DSR if the remaining time of a PDU set becomes less than (or equal to) the time threshold. More specifically, when the remaining value of the discard timer associated with a PDCP SDU becomes less than (or equal to) the time threshold, if the PDCP SDU corresponds to the PDU with the smallest sequence number within the PDU set, the PDCP entity may trigger a DSR, and the triggered DSR (and/or the associated triggered information) may be indicated to the lower layers (e.g., the MAC layer). The associated triggered information may include at least one of the PDU set ID that has triggered the DSR, the sequence number of the PDCP SDU that has triggered the DSR, and the remaining value of the discard timer of the PDU set (or the PDCP SDU) that has triggered the DSR.

In some implementations, the PDCP entity may trigger a DSR if the remaining time of a PDU set becomes less than (or equal to) the time threshold. More specifically, when the remaining value of a discard timer associated with one of the PDCP SDUs corresponding to the PDUs within the PDU set becomes less than (or equal to) the time threshold, the PDCP entity may trigger a DSR, and the triggered DSR (and/or the associated triggered information) may be indicated to the lower layers (e.g., the MAC layer). The associated triggered information may include at least one of the PDU set ID that has triggered the DSR, the sequence number of the PDCP SDU that has triggered the DSR, and the remaining value of the discard timer of the PDU set (or the PDCP SDU) that has triggered the DSR.

In some implementations, when the remaining value of the discard timer associated with a first PDCP SDU corresponding to a first PDU within a PDU set becomes less than (or equal to) the time threshold and there is an existing DSR triggered by a second PDCP SDU corresponding to a second PDU within the same PDU set, the PDCP entity may not trigger a DSR. When the remaining value of the discard timer associated with the first PDCP SDU (e.g., corresponding to the first PDU within the PDU set) becomes less than (or equal to) the time threshold and there is no DSR triggered by a second PDCP SDU corresponding to a second PDU within the same PDU set, the PDCP entity may trigger a DSR, and the triggered DSR may be indicated to the lower layers (e.g., the MAC layer). In some implementations, the UE may trigger a DSR upon determining that a remaining time value of a discard timer associated with a PDCP SDU belonging to the LCG has become less than the time threshold and no DSR has been triggered.

In some implementations, when a DSR is triggered because the remaining time of a PDCP SDU becomes less than the time threshold and the DSR is not canceled, the PDCP entity may refrain from triggering another DSR for the PDCP SDU. For example, the PDCP entity may not trigger another DSR for the PDCP SDU even if the remaining time of the PDCP SDU continues to decrease, staying below the time threshold.

In some implementations, (the value of) the time threshold may be indicated by the lower layer (e.g., the MAC layer). The PDCP entity may be allowed to trigger a DSR if the time threshold is indicated. The PDCP entity may not be allowed to trigger a DSR if the time threshold is not indicated.

In some implementations, the DSR triggering operation may be performed by a (transmitting) PDCP entity. In particular, the PDCP entity may trigger a DSR when a PDCP SDU is discarded. It should be noted that when the successful delivery of a PDCP SDU is confirmed by a PDCP status report, the PDCP entity may discard the PDCP SDU along with the corresponding PDCP data PDU.

In some implementations, when the PDCP entity discards a first PDCP SDU corresponding to a first PDU within a PDU set, if a second PDCP SDU corresponding to a second PDU within the PDU set is not discarded and the remaining value of the discard timer for the second PDCP SDU is less than (or equal to) the time threshold, the PDCP entity may trigger a DSR, and the triggered DSR with the remaining value (and/or the associated triggered information) may be indicated to the lower layers (e.g., the MAC layer). The associated triggered information may include the PDU set ID that has triggered the DSR and/or the sequence number of the PDCP SDU that has triggered the DSR.

In some implementations, when the PDCP entity discards a first PDCP SDU corresponding to a first PDU within a PDU set and there exists a second PDCP SDU corresponding to a second PDU within the PDU set that is not discarded, if the remaining value of the discard timer associated with the PDCP SDU corresponding to the PDU with the smallest sequence number within the PDU set is less than (or equal to) the time threshold, the UE may trigger a DSR, and the triggered DSR with the remaining value (and/or the associated triggered information) may be indicated to the lower layers (e.g., the MAC layer). The associated triggered information may include the PDU set ID that has triggered the DSR and/or the sequence number of the PDCP SDU that has triggered the DSR.

In some implementations, the PDCP entity triggering a DSR may mean that the PDCP entity indicates to the lower layers (e.g., the MAC layer) to trigger a DSR.

In some implementations, (the value of) the time threshold may be indicated by the lower layer (e.g., the MAC layer). The PDCP entity may be allowed to trigger a DSR if the time threshold is indicated. The PDCP entity may not be allowed to trigger a DSR if the time threshold is not indicated.

In some implementations, the DSR triggering operation may be performed by a MAC entity. When the UE is configured with a time threshold for an LCG, the PDCP entity associated with an LCH of the LCG may perform a PDCP delay-critical data volume calculation procedure. Moreover, the RLC entity associated with the PDCP entity may perform an RLC delay-critical data volume calculation procedure. The MAC entity may trigger a DSR if delay-critical UL data becomes available for the LCG. The MAC entity may determine the amount of the delay-critical UL data available for the LCG according to the PDCP/RLC delay-critical data volume calculation procedure.

In some implementations, the MAC entity may be configured with a DSR prohibit timer per LCG. The MAC entity may start/restart the DSR prohibit timer associated with an LCG when a DSR for the LCG is triggered. The MAC entity may trigger a DSR for the LCG (only) if the DSR prohibit timer associated with the LCG is not running or expired. The DSR prohibit timer of the LCG may be stopped if there is no delay-critical data volume in the PDCP buffer and the RLC buffer of any logical channel in the LCG.

### DSR Cancellation

A triggered DSR may be discarded/canceled if the UE determines that the triggered DSR has become invalid/outdated.

In some implementations, the DSR cancellation may be triggered by a MAC entity, which may maintain a DSR discard timer (e.g., the *DSRDiscardTimer*). More specifically, when a DSR is triggered, the UE may start/restart a new DSR discard timer for the DSR. When the DSR discard timer for the triggered DSR expires, the UE may cancel the triggered DSR.

In some implementations, the UE may be configured by the BS, for example, via RRC signaling, with a DSR discard timer per LCG. When a DSR is triggered for an LCG, the MAC entity may start/restart a new timer for the DSR, where the new timer may be set by the value of the DSR discard timer configured for the LCG.

In some implementations, the value of a DSR discard timer may be indicated by the PDCP entity. More specifically, when the PDCP entity indicates to the MAC entity to trigger a DSR, the PDCP entity may also indicate a value for initializing the DSR discard timer for the DSR. When the MAC entity is indicated to trigger the DSR and indicated a value for initializing the DSR discard timer for the DSR, the MAC entity may start/restart a timer for the DSR using the value indicated by the PDCP entity. For example, for a triggered DSR, the value for initializing the DSR discard timer for the DSR may be set as the remaining value of the discard timer indicated by a PDCP entity when triggering the DSR.

Considering the MAC PDU processing delay, the MAC entity may be configured with a discard threshold per LCG for the DSR discarding/cancellation. More specifically, if the remaining value of the DSR discard timer for a DSR for an LCG becomes less than the discard threshold for the LCG, the MAC entity may discard/cancel the DSR.

In some implementations, the DSR cancellation may be triggered by a PDCP entity. For example, when a PDCP SDU is discarded, the PDCP entity may indicate to the lower layers (e.g., the MAC layer) to discard/cancel the DSR that was triggered due to the remaining time of the PDCP SDU becoming less than (or equal to) the time threshold. For example, when all the PDCP SDUs belonging to a PDU set are discarded, the PDCP entity may indicate to the lower layers (e.g., the MAC layer) to discard/cancel the DSR that was triggered due to the remaining time of the PDCP SDU corresponding to the PDU with the smallest sequence number within the PDU set becoming less than (or equal to) the time threshold.

### PDCP Delay-critical Data Volume Calculation

For the purposes of reporting the MAC delay status (e.g., triggering a DSR, generating a DSR MAC CE), when a time threshold for an LCG is configured, the (transmitting) PDCP entity associated with an LCH of the LCG may perform a PDCP delay-critical data volume calculation procedure that outputs the volume of the PDCP delay-critical data and the remaining time of the PDCP delay-critical data. The result of the PDCP delay-critical data volume calculation procedure may be indicated to the lower layers (e.g., the MAC layer).

The PDCP delay-critical data volume calculation procedure may consider a PDCP SDU, the remaining discard timer value of which is less than the time threshold, as a delay-critical PDCP SDU and may consider the remaining discard timer value as the remaining time of the delay-critical PDCP SDU. The PDCP entity may consider all the delay-critical PDCP SDUs as PDCP delay-critical data. The minimum remaining time of the delay-critical PDCP SDUs may be considered as the remaining time of the PDCP delay-critical data.

In some implementations, when the PDCP entity determines a PDCP SDU as a delay-critical PDCP SDU, if the corresponding PDCP data PDU has already been submitted to the lower layers, the PDCP entity may indicate to the lower layers to consider the corresponding PDCP data PDU as delay-critical data and may indicate to the lower layers the remaining time of the delay-critical PDCP SDU.

In some implementations, for a PDCP data PDU that has not been submitted to the lower layers, the PDCP delay-critical data volume calculation procedure may consider the PDCP data PDU, the remaining discard timer value of which is less than the time threshold, as a delay-critical PDCP data PDU and may consider the remaining discard timer value as the remaining time of the delay-critical PDCP data PDU. The PDCP entity may consider all the delay-critical PDCP data PDUs as PDCP delay-critical data. The minimum remaining time of the delay-critical PDCP data PDUs may be considered as the remaining time of the PDCP delay-critical data.

In some implementations, the PDCP entity may consider all the delay-critical PDCP data PDUs and all the delay-critical PDCP SDUs as PDCP delay-critical data.

In some implementations, the PDCP delay-critical data volume calculation procedure may be performed from a PDU set's perspective. For example, a PDCP SDU, the remaining discard timer value of which is not less than the time threshold, may be considered as a delay-critical PDCP SDU if the PDCP SDU belongs to a PDU set that includes at least one PDU corresponding to a delay-critical PDCP SDU. For example, for a PDCP data PDU that has not been submitted to the lower layers, if the remaining discard timer value of the PDCP data PDU is not less than the time threshold, the PDCP data PDU may be considered as a delay-critical PDCP data PDU if the PDCP data PDU belongs to a PDU set that includes at least one PDU corresponding to a delay-critical PDCP data PDU.

In some implementations, the PDCP delay-critical data may include a first PDCP SDU and a second PDCP SDU, where the discard timer of the first PDCP SDU has a remaining time value less than the time threshold, the discard timer of the second PDCP SDU has a remaining time value not less than the time threshold, and the second PDCP SDU belongs to a PDU set including at least one PDCP SDU (e.g., different from the second PDCP SDU), the associated discard timer of which has a remaining time value less than the time threshold.

### RLC Delay-critical Data Volume Calculation

For the purposes of reporting the MAC delay status (e.g., triggering a DSR, generating a DSR MAC CE), the (transmitting) RLC entity may be indicated by upper layer (e.g., the PDCP layer) or lower layer (e.g., the MAC layer) to perform an RLC delay-critical data volume calculation procedure that outputs the volume of the RLC delay-critical data and the remaining time of the RLC delay-critical data. The RLC entity may indicate the result of the RLC delay-critical data volume calculation procedure to the MAC entity.

In some implementations, when the RLC entity is indicated, by the upper layer (e.g., the PDCP layer), a particular RLC SDU with a remaining time, the RLC entity may consider the RLC SDU as a delay-critical RLC SDU and may consider the remaining time as the remaining time of the delay-critical RLC SDU. The RLC entity may consider all the delay-critical RLC SDUs as RLC delay-critical data. The minimum remaining time of the delay-critical RLC SDUs may be considered as the remaining time of the RLC delay-critical data.

In some implementations, when the RLC entity is indicated, by the upper layer (e.g., the PDCP layer), a particular RLC data PDU with a remaining time, the RLC entity may consider the RLC data PDU as a delay-critical RLC data PDU and may consider the remaining time as the remaining time of the delay-critical RLC data PDU. The RLC entity may consider all the delay-critical RLC data PDUs as RLC delay-critical data. The minimum remaining time of the delay-critical RLC data PDUs may be considered as the remaining time of the RLC delay-critical data.

In some implementations, the RLC entity may consider all the delay-critical RLC SDUs and all the delay-critical RLC data PDUs as RLC delay-critical data. The minimum remaining time of the delay-critical RLC SDUs and the delay-critical RLC data PDUs may be considered as the remaining time of the RLC delay-critical data.

### DSR Types and the Corresponding DSR MAC CE

For a triggered DSR, a UE may determine the type of DSR to be reported for the triggered DSR before the LCP, so that the UE may determine whether the DSR MAC CE can be accommodated as a result of the LCP when the UL-SCH resources are available for a new transmission.

In some implementations, for a triggered DSR, the UE may report a short DSR for an LCG. For a short DSR, the UE may generate a DSR MAC CE with a fixed size.

In some implementations, for (a) triggered DSR(s), the UE may report a long DSR for the LCGs that have delay-critical data available for transmission. For a long DSR, the UE may generate a DSR MAC CE with a variable size.

In some implementations, for a triggered DSR, if more than one LCG has delay-critical data available for transmission, when building a MAC PDU containing the DSR, the UE may report a long DSR, otherwise the UE may report a short DSR.

In some implementations, a short DSR MAC CE or a long DSR MAC CE may include at least one of the following fields:
- LCG ID: The LCG ID field may identify the group of logical channels whose delay status is being reported.
- Buffer Size: The Buffer Size field may identify the total amount of delay-critical data available according to the delay-critical data volume calculation procedure performed by the PDCP and/or RLC entities across all the logical channels of a logical channel group after the MAC PDU has been built (e.g., after the logical channel prioritization procedure). In some implementations, the value of this field may be determined based on a legacy BSR table and/or a newly introduced BSR table for the XR services. The UE may be indicated, by the BS, via RRC/MAC/PHY signaling, whether the newly introduced BSR table is used for the DSR. For example, the UE may determine the Buffer Size field for the LCG based on either a first predefined table (e.g., the newly introduced BSR table for the XR services) or a second predefined table (e.g., the legacy BSR table). The UE may determine the Buffer Size field for the LCG based on the first predefined table in response to receiving a table indication from the BS via RRC signaling. The UE may determine the Buffer Size field for the LCG based on the second predefined table in a case that the table indication is not received from the BS.
- Remaining Time: The Remaining Time field may be determined/identified by the minimum remaining time of delay-critical data available according to the PDCP/RLC delay-critical data volume calculation procedure performed by the PDCP and RLC entities across all the logical channels of a logical channel group after the MAC PDU has been built (e.g., after the logical channel prioritization procedure). For example, LCH #1 and LCH #2 belong to LCG #1, and a MAC entity may obtain the following results: the remaining time of PDCP delay-critical data from LCH #1 is 10 ms, the remaining time of RLC delay-critical data from LCH #1is 8 ms, the remaining time of PDCP delay-critical data from LCH #2 is 9 ms, the remaining time of RLC delay-critical data from LCH #2is 9 ms. Then the remaining time field for the DSR MAC CE for LCG #1 may be identified as 8 ms.
- LCGi: For the Long DSR format, this field may indicate the presence of the Buffer Size field and the Remaining Time field for the logical channel group i. For example, the LCGi field set to 1 may indicate that the Buffer Size field and the Remaining Time field for the logical channel group i is reported. The LCGi field set to 0 may indicate that the Buffer Size field and the Remaining Time field for the logical channel group i is not reported. For the Short DSR format, this field may not exist.

In some implementations, the UE may report another type of DSR for an LCG, where the DSR may further include the delay status of LCHs belonging to the LCG. This type of DSR may be referred to as an extended or enhanced (short/long) DSR. The extended or enhanced (short/long) DSR may include at least one of the following fields:
- LCH ID: The Logical Channel ID field may identify the logical channel belonging to the LCG whose delay status is being reported.
- Remaining Time: This field may identify the minimum remaining time of delay-critical data available according to the PDCP/RLC delay-critical data volume calculation procedure performed by the PDCP and RLC entities for a logical channel belonging to the LCG after the MAC PDU has been built (e.g., after the logical channel prioritization procedure).

In some implementations, the UE may be indicated by the BS via RRC/MAC/PHY signaling whether an extended or enhanced (short/long) DSR is allowed to be reported.

In some implementations, the remaining time field value may need to be reduced by a time duration when the time duration is greater than 0 ms, where the time duration is measured from the time at which the DSR MAC CE is built to the time of the first symbol of the PUSCH transmission carrying the DSR MAC CE. For example, the remaining time of the delay-critical data to be reported according to the PDCP/RLC delay-critical data volume calculation procedure may be 10 ms when the DSR MAC CE is built. If the time duration is 2 ms, the remaining time of the delay-critical data to be reported in the DSR MAC CE may be 8 ms. In some implementations, the time duration may be a fixed value in units of milliseconds, which may be pre-defined and/or configured by the BS, e.g., via RRC signaling.

In some implementations, the DSR formats may be identified by MAC subheaders with LCID(s) for the UL-SCH. In some implementations, the DSR formats may be identified by MAC subheaders with one-octet/two-octet eLCID(s) for the UL-SCH.

### Enhanced LCP

The UE may apply the LCP procedure whenever a new transmission is performed. In some implementations, in the LCP procedure, the priority of the DSR MAC CE may be lower than the priority of the CG Confirmation MAC CE and higher than the priority of the MAC CE for BSR (excluding BSR included for padding). In some implementations, a MAC PDU may include at most one DSR MAC CE even if one or more DSRs are triggered.

### SR for DSR

An enhanced SR (eSR) may be introduced for requesting the UL-SCH resources for the new transmission of the delay-critical data. For example, the UE may transmit, to the BS, an SR or eSR for requesting uplink resources for the transmission of the DSR MAC CE. The MAC entity may be configured with zero, one, or more eSR configurations. An eSR configuration may include a set of PUCCH resources for the eSR across the different BWPs and cells. For a logical channel, at most one PUCCH resource for the eSR may be configured per BWP.

In some implementations, when at least one DSR has been triggered and not canceled, a MAC entity may trigger an eSR if at least one of the following conditions is met:
- There is no UL-SCH resource available for a new transmission (e.g., a new transmission for a DSR MAC CE).
- The UL-SCH resources available for a new transmission do not meet the LCP mapping restrictions configured for the logical channel that has triggered the DSR.
- The DSR discard timer for the triggered DSR is running.
- The remaining time of the DSR discard timer for the triggered DSR is less than an eSR triggering time threshold, where the eSR triggering time threshold may be configured by the BS, e.g., via RRC signaling, and/or may be pre-defined as a fixed value.

Each eSR configuration may correspond to one or more logical channels. Each logical channel may be mapped to zero or one eSR configuration, which may be configured via RRC signaling. The eSR configuration of the logical channel that has triggered the DSR (if such a configuration exists) may be considered as the corresponding eSR configuration for the triggered eSR.

In some implementations, a triggered eSR may be canceled if the UE cancels all the DSRs triggered by the LCHs that are mapped to the eSR configuration for the triggered eSR.

In some implementations, if one eSR is triggered due to the DSR, the one eSR may be considered as pending until it is canceled.

In some implementations, if one pending eSR was triggered by a DSR prior to the MAC PDU's assembly and a MAC PDU containing the DSR is transmitted, the UE may cancel the pending eSR.

In some implementations, if at least one eSR is pending and if the MAC entity of the UE has no valid PUCCH resource configured, the UE may not initiate a random access procedure. Instead, the UE may cancel the pending eSR and/or cancel the DSR triggered the pending eSR.

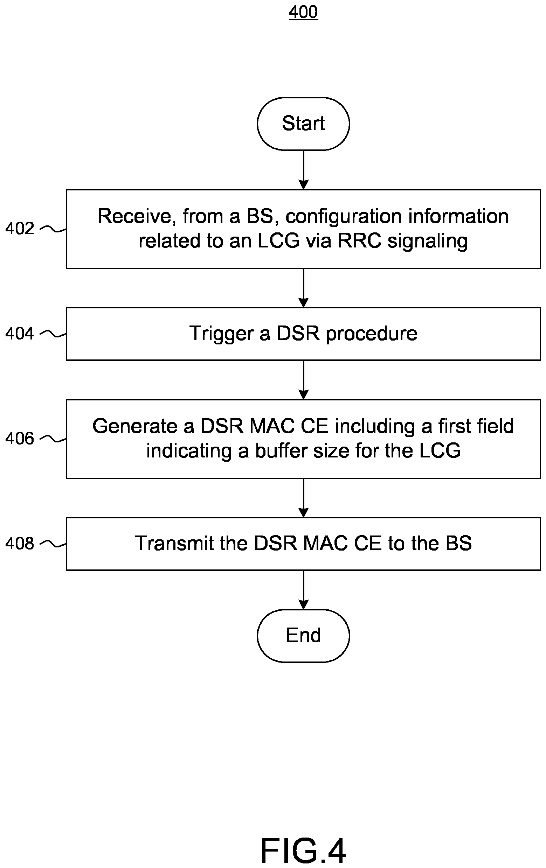

FIG. 4 is a flowchart illustrating a method/process 400 performed by a UE for DSR, according to an example implementation of the present disclosure. In the action 402, the process 400 may start by receiving, from a BS, configuration information related to an LCG via RRC signaling. In the action 404, the process 400 may trigger a DSR procedure. In some implementations, triggering the DSR procedure may include triggering the DSR procedure upon determining that a remaining time value of a discard timer associated with a PDCP SDU belonging to the LCG has become less than the time threshold and no DSR procedure has been triggered.

In the action 406, the process 400 may generate a DSR MAC CE including a first field indicating a buffer size for the LCG. In the action 408, the process 400 may transmit the DSR MAC CE to the BS. The buffer size may indicate a total amount of delay-critical data for the LCG. The delay-critical data for the LCG may include a first PDCP SDU for which a first discard timer has a remaining time value less than a time threshold associated with the LCG and a second PDCP SDU belonging to a PDU set that includes at least one PDCP SDU for which a second discard timer has a remaining time value less than the time threshold. The process 400 may then end.

In some implementations, the time threshold associated with the LCG may be received from the BS via the RRC signaling.

In some implementations, the buffer size for the LCG may be determined based on either a first predefined table or a second predefined table. The first predefined table may be for XR services. In some implementations, the UE may determine the buffer size for the LCG based on the first predefined table in response to receiving a table indication from the BS via the RRC signaling. The UE may determine the buffer size for the LCG based on the second predefined table in a case that the table indication is not received from the BS.

In some implementations, the DSR MAC CE may further include a second field indicating a minimum remaining time of the delay-critical data for the LCG.

In some implementations, the UE may transmit, to the BS, an SR for requesting uplink resources for transmission of the DSR MAC CE.

The steps/actions shown in FIG. 4 should not be construed as necessarily order dependent. The order in which the process is described is not intended to be construed as a limitation. Moreover, some of the actions shown in FIG. 4 may be omitted in some implementations and one or more actions shown in FIG. 4 may be combined.

The technical problem addressed by the method illustrated in FIG. 4 is improving the accuracy and efficiency of the DSR to manage the transmission of delay-critical data in the wireless communication networks. By defining the delay-critical data in two different ways, the method combines two criteria to better reflect the urgency of data transmission. This enhanced definition for the delay-critical data allows for a more precise indication of the buffer size in the DSR MAC CE, which helps the BS allocate resources more effectively. This improves network performance by preventing the unnecessary loss of the time-sensitive data.

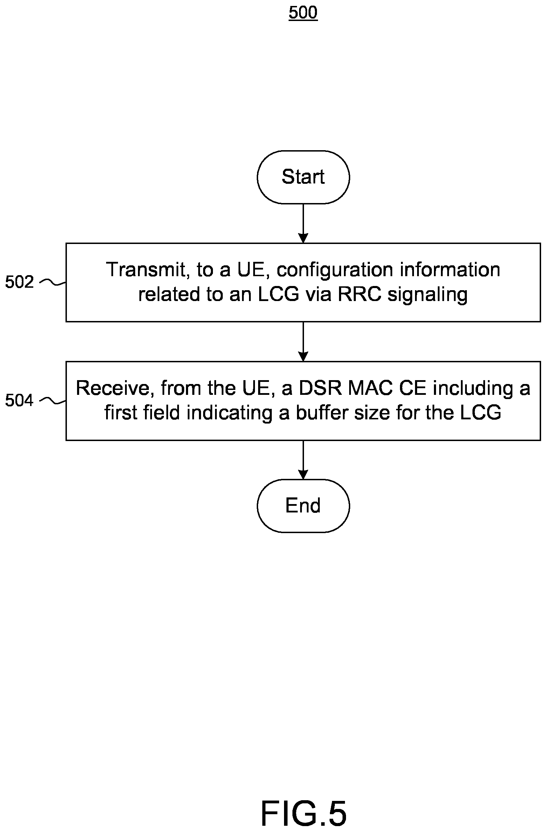

FIG. 5 is a flowchart illustrating a method/process 500 performed by a BS for configuring DSR, according to an example implementation of the present disclosure. In the action 502, the process 500 may start by transmitting, to a UE, configuration information related to an LCG via RRC signaling. In the action 504, the process 500 may receive, from the UE, a DSR MAC CE including a first field indicating a buffer size for the LCG. The buffer size may indicate a total amount of delay-critical data for the LCG. The delay-critical data for the LCG may include a first PDCP SDU for which a first discard timer has a remaining time value less than a time threshold associated with the LCG and a second PDCP SDU belonging to a PDU set that includes at least one PDCP SDU for which a second discard timer has a remaining time value less than the time threshold. The process 500 may then end. The method illustrated in FIG. 5 is similar to that in FIG. 4, except that it is described from the perspective of the BS (instead of the UE).

In some implementations, the BS may transmit, to the UE, the time threshold associated with the LCG via the RRC signaling. In some implementations, the DSR MAC CE may further include a second field indicating a minimum remaining time of the delay-critical data for the LCG. In some implementations, the BS may receive, from the UE, an SR for requesting uplink resources for the transmission of the DSR MAC CE.

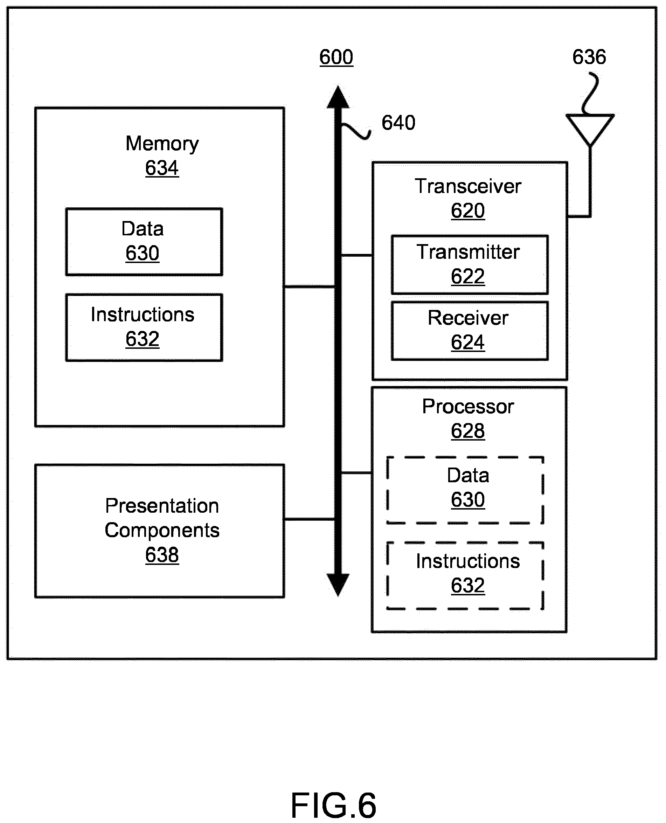

FIG. 6 is a block diagram illustrating a node 600 for wireless communication in accordance with various aspects of the present disclosure. As illustrated in FIG. 6, a node 600 may include a transceiver 620, a processor 628, a memory 634, one or more presentation components 638, and at least one antenna 636. The node 600 may also include a radio frequency (RF) spectrum band module, a BS communications module, a network communications module, and a system communications management module, Input / Output (I/O) ports, I/O components, and a power supply (not illustrated in FIG. 6).

Each of the components may directly or indirectly communicate with each other over one or more buses 640. The node 600 may be a UE or a BS that performs various functions disclosed with reference to FIGS. 1 through 5.

The transceiver 620 has a transmitter 622 (e.g., transmitting/transmission circuitry) and a receiver 624 (e.g., receiving/reception circuitry) and may be configured to transmit and/or receive time and/or frequency resource partitioning information. The transceiver 620 may be configured to transmit in different types of subframes and slots including, but not limited to, usable, non-usable, and flexibly usable subframes and slot formats. The transceiver 620 may be configured to receive data and control channels.

The node 600 may include a variety of computer-readable media. Computer-readable media may be any available media that may be accessed by the node 600 and include volatile (and/or non-volatile) media and removable (and/or non-removable) media.

The computer-readable media may include computer-storage media and communication media. Computer-storage media may include both volatile (and/or non-volatile media), and removable (and/or non-removable) media implemented in any method or technology for storage of information such as computer-readable instructions, data structures, program modules, or data.

Computer-storage media may include RAM, ROM, EPROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer-storage media may not include a propagated data signal. Communication media may typically embody computer-readable instructions, data structures, program modules, or other data in a modulated data signal, such as a carrier wave, or other transport mechanisms and include any information delivery media.

The term "modulated data signal" may mean a signal that has one or more of its characteristics set or changed in such a manner as to encode information in the signal. Communication media may include wired media, such as a wired network or direct-wired connection, and wireless media, such as acoustic, RF, infrared, and other wireless media. Combinations of any of the above listed components should also be included within the scope of computer-readable media.

The memory 634 may include computer-storage media in the form of volatile and/or non-volatile memory. The memory 634 may be removable, non-removable, or a combination thereof. Example memory may include solid-state memory, hard drives, optical-disc drives, etc. As illustrated in FIG. 6, the memory 634 may store a computer-readable and/or computer-executable instructions 632 (e.g., software codes) that are configured to, when executed, cause the processor 628 to perform various functions disclosed herein, for example, with reference to FIGS. 1 through 5. Alternatively, the instructions 632 may not be directly executable by the processor 628 but may be configured to cause the node 600 (e.g., when compiled and executed) to perform various functions disclosed herein.

The processor 628 (e.g., having processing circuitry) may include an intelligent hardware device, e.g., a Central Processing Unit (CPU), a microcontroller, an ASIC, etc. The processor 628 may include memory. The processor 628 may process the data 630 and the instructions 632 received from the memory 634, and information transmitted and received via the transceiver 620, the baseband communications module, and/or the network communications module. The processor 628 may also process information to send to the transceiver 620 for transmission via the antenna 636 to the network communications module for transmission to a CN.

One or more presentation components 638 may present data indications to a person or another device. Examples of presentation components 638 may include a display device, a speaker, a printing component, a vibrating component, etc.

In view of the present disclosure, it is obvious that various techniques may be used for implementing the disclosed concepts without departing from the scope of those concepts. Moreover, while the concepts have been disclosed with specific reference to certain implementations, a person of ordinary skill in the art may recognize that changes may be made in form and detail without departing from the scope of those concepts. As such, the disclosed implementations are to be considered in all respects as illustrative and not restrictive. It should also be understood that the present disclosure is not limited to the particular implementations disclosed and many rearrangements, modifications, and substitutions are possible without departing from the scope of the present disclosure.

## Claims

1. A method performed by a User Equipment, UE (600), for Delay Status Reporting, DSR, the method comprising:
receiving (402), from a base station, BS, configuration information related to a Logical Channel Group, LCG, via Radio Resource Control, RRC, signaling;
triggering (404) a DSR procedure;
generating (406) a DSR Medium Access Control, MAC, Control Element, CE, comprising a first field indicating a buffer size for the LCG; and
transmitting (408) the DSR MAC CE to the BS, wherein:
the buffer size indicates a total amount of delay-critical data for the LCG, and
the delay-critical data for the LCG comprises:
a first Packet Data Convergence Protocol, PDCP, Service Data Unit, SDU, for which a first discard timer has a remaining time value less than a time threshold associated with the LCG; and
a second PDCP SDU belonging to a Protocol Data Unit, PDU, set that includes at least one PDCP SDU for which a second discard timer has a remaining time value less than the time threshold.

2. The method of claim 1, further comprising:
receiving, from the BS, the time threshold associated with the LCG via the RRC signaling.

3. The method of claim 1 or 2, wherein triggering the DSR procedure comprises:
triggering the DSR procedure upon determining that a remaining time value of a discard timer associated with a PDCP SDU belonging to the LCG has become less than the time threshold and no DSR procedure has been triggered.

4. The method of any one of the preceding claims, further comprising:
determining the buffer size for the LCG based on either a first predefined table or a second predefined table.

5. The method of claim 4, wherein:
the first predefined table is for extended Reality, XR, services.

6. The method of claim 4 or 5, wherein determining the buffer size for the LCG comprises:
determining the buffer size for the LCG based on the first predefined table in response to receiving a table indication from the BS via the RRC signaling; and
determining the buffer size for the LCG based on the second predefined table in a case that the table indication is not received from the BS.

7. The method of any one of the preceding claims, wherein the DSR MAC CE further comprises a second field indicating a minimum remaining time of the delay-critical data for the LCG.

8. The method of any one of the preceding claims, further comprising:
transmitting, to the BS, a Scheduling Request, SR, for requesting uplink resources for the transmission of the DSR MAC CE.

9. A User Equipment, UE (600), for Delay Status Reporting, DSR, the UE comprising:
at least one processor (628); and
at least one non-transitory computer-readable medium (634) coupled to the at least one processor and storing one or more computer-executable instructions that, when executed by the at least one processor, cause the UE to perform the method of any of claims 1 to 8.

10. A Base Station, BS (600), for configuring Delay Status Reporting, DSR, the BS comprising:
at least one processor (628); and
at least one non-transitory computer-readable medium (634) coupled to the at least one processor and storing one or more computer-executable instructions that, when executed by the at least one processor, cause the BS to:
transmit (502), to a user equipment, UE, configuration information related to a Logical Channel Group, LCG, via Radio Resource Control, RRC, signaling; and
receive (504), from the UE, a DSR Medium Access Control, MAC, Control Element, CE, comprising a first field indicating a buffer size for the LCG, wherein:
the buffer size indicates a total amount of delay-critical data for the LCG, and
the delay-critical data for the LCG comprises:
a first Packet Data Convergence Protocol, PDCP, Service Data Unit, SDU, for which a first discard timer has a remaining time value less than a time threshold associated with the LCG; and
a second PDCP SDU belonging to a Protocol Data Unit, PDU, set that includes at least one PDCP SDU for which a second discard timer has a remaining time value less than the time threshold.

11. The BS of claim 10, wherein the one or more computer-executable instructions, when executed by the at least one processor, further cause the BS to:
transmit, to the UE, the time threshold associated with the LCG via the RRC signaling.

12. The BS of claim 10 or 11, wherein the DSR MAC CE further comprises a second field indicating a minimum remaining time of the delay-critical data for the LCG.

13. The BS of claim 10, 11, or 12, wherein the one or more computer-executable instructions, when executed by the at least one processor, further cause the BS to:
receive, from the UE, a Scheduling Request, SR, for requesting uplink resources for the transmission of the DSR MAC CE.
